(19) Europäisches Patentamt
European Patent Office
Office européen des brevets

(11) **EP 2 706 489 A1**

(12) **EUROPÄISCHE PATENTANMELDUNG**

(43) Veröffentlichungstag:
**12.03.2014 Patentblatt 2014/11**

(51) Int Cl.:
***G06Q 10/06*** *(2012.01)*

(21) Anmeldenummer: 13450041.2

(22) Anmeldetag: **06.09.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.09.2012 AT 9782012**

(71) Anmelder:
• **Helbok, Günther**
**1080 Wien (AT)**
• **Babak, Houman**
**1060 Wien (AT)**

(72) Erfinder:
• **Helbok, Günther**
**1080 Wien (AT)**
• **Babak, Houman**
**1060 Wien (AT)**

(74) Vertreter: **Keschmann, Marc**
**Haffner und Keschmann**
**Patentanwälte GmbH**
**Schottengasse 3a**
**1014 Wien (AT)**

(54) **Computergestütztes Verfahren zur automatischen Zuweisung von Arbeitsaufgaben in einem Arbeitsablauf-Verwaltungs-System**

(57) Ein computergestütztes Verfahren zur automatischen Zuweisung von Arbeitsaufgaben in einem Arbeitsablauf-Verwaltungs-System, umfassend

- das Vorsehen wenigstens eines ersten gerichteten Graphen und wenigstens eines zweiten gerichteten Graphen, jeweils umfassend Objekte und zwischen diesen Objekten bestehende Verbindungen, wobei Objekte, deren Verbindungen direkt oder indirekt von einem übergeordneten Objekt ausgehen, Unterobjekte dieses Objekts ausbilden,

- Vorsehen von wenigstens zwei verschiedenen Berechtigungskategorien, wobei eine erste Berechtigungskategorie eine auf das jeweilige Objekt beschränkte, lokale Berechtigung darstellt und eine zweite Berechtigungskategorie eine sich auf das jeweilige Objekt und zumindest einen Teil der Unterobjekte dieses Objekts erstreckende Berechtigung darstellt,

- Zuweisen, in Bezug auf einen Benutzer, einer Berechtigungskategorie zu wenigstens einem Objekt in dem ersten und zu wenigstens einem Objekt in dem zweiten Graphen, um jeweils wenigstens ein zugewiesenes Objekt zu erhalten,

- Bilden des kartesischen Produkts aus dem ersten und dem zweiten Graphen, um einen Produktgraphen zu erhalten,

- Identifizieren des sich aus dem zugewiesenen Objekt des ersten Graphen und dem zugewiesenen Objekt des zweiten Graphen ergebenden Produktobjekts des Produktgraphen und Identifizieren von Unterobjekten des Produktobjekts, die ggf. von der zweiten Berechtigungskategorie miterfasst sind,

- Zuweisen des Benutzers zu dem identifizierten Produktobjekt und den identifizierten Unterobjekten des Produktgraphen,

- Erhalten einer Zuständigkeitsanforderung hinsichtlich eines angeforderten Objekts des Produktgraphen,

- Ermitteln des dem angeforderten Objekt zugewiesenen Benutzers,

- Zuweisen der Anforderung zu dem Benutzer.

EP 2 706 489 A1

Fig. 1

**Beschreibung**

Die Erfindung betrifft ein computergestütztes Verfahren zur automatischen Zuweisung von Arbeitsaufgaben an Benutzer in einem Arbeitsablauf-Verwaltungs-System.

Die Erfindung betrifft weiters ein Datenverarbeitungsprogramm zur Ausführung in einem Datenverarbeitungssystem, das Softwarecode-Elemente zur Ausführung des erfindungsgemäßen Verfahrens umfasst. Die Erfindung betrifft weiters ein Computerprogrammprodukt, das auf einem durch einen Computer nutzbaren Medium gespeichert ist und vom Computer lesbare Programm-Mittel enthält, um einen Computer zu veranlassen, das erfindungsgemäße Verfahren auszuführen.

Moderne Arbeitsablauf-Verwaltungs-Systeme (Workflow-Management-Systeme) sind in vielen Betrieben unverzichtbarer Bestandteil des Unternehmensmanagements. Ein Arbeitsablauf ist hierbei ein Prozess, der aus einzelnen Aktivitäten aufgebaut ist, die sich (beispielsweise) auf Produkthierarchien, Teile eines Geschäftsprozesses und/oder andere organisatorische Vorgänge beziehen. Zur Verwaltung von Arbeitsabläufen werden in der Regel Softwaresysteme eingesetzt. Diese Systeme erlauben neben der Definition auch die Durchführung der Arbeitsabläufe, indem sie die Workflow-Instanzen nach einem vorgegebenen, im Rechner abgebildeten Schema steuern und dazu benötigte Daten und Applikationen bereitstellen oder abfragen. Die Aufgabe eines Workflow-Management-Systems besteht darin, zu koordinieren, wer (Rollen) was (Aufgabe) wann (Prozess) und wie (Umgebung) bearbeitet.

Eine Rolle umfasst Aufgaben, deren Zugangsberechtigungen auf identischen Kategorisierungsbereichen basieren.

Die Grundlage von Workflow-Management-Systemen bilden meist eine Abbildung der Unternehmensstrukturen, Produktkataloge und ähnlicher Kategorisierungsmodelle. Diese Strukturen sind jedoch keineswegs statischer Natur, sondern verändern sich im Laufe der Zeit in allen Dimensionen. Veränderungen in den genannten Modellen führen oft zu einem enormen Aufwand bei der kontinuierlich notwendigen Anpassung der hierauf basierenden Betriebsprozesse.

Die Feststellung der Zuständigkeit einer Person/Stelle für einen eingehenden, aus mehreren Attributen zusammengesetzten Antrag ist in hinreichend großen Unternehmen ein aufwendiger, komplexer und wartungsintensiver Prozess, der ebenfalls modelliert und verwaltet werden muss.

Die vorliegende Erfindung zielt daher darauf ab, eine computergestützte Arbeitsablaufverwaltung dahingehend zu verbessern, dass Arbeitsaufgaben automatisch einer zuständigen Person oder Stelle zugeteilt werden. Mit der Erfindung soll einerseits die Komplexität und der Wartungsaufwand eines Zuständigkeitskatalogs für die Benutzer sowohl bei der Ersterfassung als auch bei den anfallenden Aktualisierungen während des laufenden Prozessbetriebes, die beispielsweise durch Änderungen der Prozessstrukturen und/oder Organisationshierarchien ausgelöst werden, reduziert werden. Des weiteren soll der Erfolg der Suche nach einer zuständigen Person bzw. Stelle bei Vorlage eines vollständig ausgefüllten Antrages beziehungsweise unmittelbar nach Umstrukturierungen stets garantiert werden.

Zur Lösung dieser Aufgaben sieht die Erfindung ein Verfahren mit den folgenden Schritten vor:

- das Vorsehen wenigstens eines ersten gerichteten Graphen und wenigstens eines zweiten gerichteten Graphen, jeweils umfassend Objekte und zwischen diesen Objekten bestehende Verbindungen, wobei Objekte, deren Verbindungen direkt oder indirekt von einem übergeordneten Objekt ausgehen, Unterobjekte dieses Objekts ausbilden,
- Vorsehen von wenigstens zwei verschiedenen Berechtigungskategorien, wobei eine erste Berechtigungskategorie eine auf das jeweilige Objekt beschränkte, lokale Berechtigung darstellt und eine zweite Berechtigungskategorie eine sich auf das jeweilige Objekt und zumindest einen Teil der Unterobjekte dieses Objekts erstreckende Berechtigung darstellt,
- Zuweisen, in Bezug auf einen Benutzer, einer Berechtigungskategorie zu wenigstens einem Objekt in dem ersten und zu wenigstens einem Objekt in dem zweiten Graphen, um jeweils wenigstens ein zugewiesenes Objekt zu erhalten,
- Bilden des kartesischen Produkts aus dem ersten und dem zweiten Graphen, um einen Produktgraphen zu erhalten,
- Identifizieren des sich aus dem zugewiesenen Objekt des ersten Graphen und dem zugewiesenen Objekt des zweiten Graphen ergebenden Produktobjekts des Produktgraphen und Identifizieren von Unterobjekten des Produktobjekts, die ggf. von der zweiten Berechtigungskategorie miterfasst sind,
- Zuweisen des Benutzers zu dem identifizierten Produktobjekt und den identifizierten Unterobjekten des Produktgraphen,
- Erhalten einer Zuständigkeitsanforderung hinsichtlich eines angeforderten Objekts des Produktgraphen,
- Ermitteln des dem angeforderten Objekt zugewiesenen Benutzers,
- Zuweisen der Anforderung zu dem Benutzer.

Dadurch, dass wenigstens ein erster gerichteter Graph und wenigstens ein zweiter gerichteter Graph vorgesehen sind, können die gesamten Zuständigkeiten eines Benutzers in jedem Kategorisierungsbereich des Unternehmens gesondert voneinander definiert werden. Ein Graph stellt den jeweiligen Kategorisierungsbereich des Unternehmens bevorzugt als hierarchische Struktur, d.h. als Baumstruktur dar, in der mehrere Ebenen von Objekten vorgesehen sind. Als Kategorisierungsbereiche kommen beispielsweise geographische Bereiche und der Produktkatalog des Unternehmens und/oder rechtliche Einheiten/Niederlassungen und/oder Organisationshierarchie/Geschäftsbereiche/Divisionen und/oder Prozesskataloge des Unternehmens in Frage. Hierdurch ist es möglich, mehrdimensionale Organisationsstrukturen, bei der durch parallele Verwendung verschiedener Kriterien in der Kompetenzabgrenzung (Produkt, rechtliche Einheit, Division etc.) auf einer Hierarchieebene organisatorische Teilbereiche gebildet werden, berechtigungstechnisch abzubilden. Durch Verwendung der vorliegenden Erfindung kann der Nachteil der erhöhten Anforderung in der Koordination der Kompetenzabgrenzung in mehrdimensionalen Organisationsstrukturen wesentlich verringert werden.

Ein weiterer Vorteil der Erfindung ist die Reduktion des Aufwandes für die Verwaltung der den Benutzern zugewiesenen Aufgabenbereichen.

Ein weiterer Vorteil der Erfindung ist, dass Änderungen in den Kategorisierungsbereichen automatisch als Änderungen in den Verantwortungsbereichen aufscheinen.

Ein weiterer Vorteil der Erfindung liegt in der Sicherheit, dass eingehende Anträge bearbeitet werden, wenn einem einzelnen Benutzer delegierbare Aufgabenbereiche zugewiesen sind.

Die Zuständigkeiten werden hierbei durch das Vergeben von Berechtigungen an bestimmte Objekte definiert. Erfindungsgemäß ist vorgesehen, dass es eine Mehrzahl von Berechtigungskategorien gibt. So gibt es eine erste, lokale Berechtigungskategorie, die einen sich lediglich auf ein einziges Objekt beziehenden Aufgabenbereich der betreffenden Person definiert. Bei der zweiten, globalen oder delegierbaren Berechtigungskategorie besteht der Aufgabenbereich hingegen aus dem zugewiesenen Objekt samt einem Subbaum bzw. wenigstens einem Teil der Unterobjekte des zugewiesenen Objekts. Bevorzugt ist hierbei vorgesehen, dass die zweite Berechtigungskategorie eine sich auf das jeweilige Objekt und alle Unterobjekte dieses Objekts erstreckende Berechtigung darstellt.

Wenn nun im Rahmen der Erfindung das kartesische Produkt aus dem ersten und dem zweiten Graphen gebildet wird, um einen Produktgraphen zu erhalten, kann ausgehend von einem im Rahmen einer Zuständigkeitsanforderung angeforderten Objekt des Produktgraphen in einfacher Weise die Zuständigkeit für die entsprechende Arbeitsaufgabe ermittelt werden. Es reicht für diesen Zweck nämlich aus, den Aufgabenbereich durch Nachverfolgen der sich aus den jeweiligen Berechtigungskategorien ergebenden Verbindungen zu ermitteln. Im Vergleich zu bisherigen, wesentlich komplizierteren Verfahrensweisen ist es dabei nicht erforderlich, sämtliche Kombinationen einzeln zu berechnen, sodass einerseits der Rechenaufwand verringert wird und andererseits die Flexibilität und Anpassungsfähigkeit des Gesamtsystems wesentlich verbessert wird. Beispielsweise ist es bei einer Änderung der Berechtigungskategorie einer Person nicht mehr erforderlich, alle Kombinationen neu zu berechnen, sondern es muss die geänderte Berechtigung im Produktgraph lediglich beim Nachverfolgen der einzelnen Verbindungen neu berücksichtigt werden. Dasselbe gilt für den Fall, dass die Berechtigung bzw. Zuständigkeit einer Person in Bezug auf ein oder mehrere Objekte durch die Berechtigung bzw. Zuständigkeit einer anderen Person ersetzt wird. In einem solchen Fall muss nicht das gesamte System neu berechnet werden, sondern es muss die geänderte Berechtigung vom jeweiligen Graph lediglich an den Produktgraph weitergegeben werden, sodass ohne großen Aufwand und in kürzester Zeit ein aktualisiertes Gesamtsystem vorliegt.

Die Vorteile der Erfindung werden vor allem bei großen Unternehmen mit unübersichtlichen, komplexen und mehrdimensionalen Organisationsstrukturen merkbar. Insbesondere lässt sich das erfindungsgemäße Verfahren nahezu beliebig skalieren ohne den Rechenaufwand überproportional zu erhöhen. Bevorzugt können im Rahmen der Erfindung nicht nur zwei Graphen berücksichtigt werden, sondern ohne weiteres auch mehrere Graphen, insbesondere wenigstens ein weiterer Graph, der Objekte und zwischen diesen Objekten bestehende Verbindungen umfasst, und dessen Objekten Berechtigungen gesondert zugewiesen werden können. Der wenigstens eine weitere Graph wird bei der Bildung des kartesischen Produkts berücksichtigt und es wird ausgehend von einem angefragten Produktobjekt des Produktgraphen bei der Ermittlung der zuständigen Person analog vorgegangen wie oben im Zusammenhang mit einem aus zwei Graphen gebildeten Produktgraphen.

Wie bereits erwähnt müssen bei der Identifizierung von Unterobjekten, die dem Aufgabenbereich einer Person angehören, diejenigen Verbindungen zu Unterobjekten nachverfolgt werden, die der Berechtigungskategorie der Person im jeweiligen Graphen entsprechen. Zu diesem Zweck muss festgestellt werden, welche Berechtigungskategorie in welchem der beiden Ausgangsgraphen zugewiesen wurde. Das Nachverfolgen von Verbindungen zur Identifikation von Unterobjekten ist hierbei nur dann durchzuführen, wenn eine zweite Berechtigungskategorie zugewiesen wurde, die zumindest einen Teil der Unterobjekte eines Objekts miterfasst. Für den Fall, dass die zweite Berechtigungskategorie vorsieht, dass alle Unterobjekte des jeweiligen Objekts miterfasst sind, wird bei der Identifikation der vom Aufgabenbereich mitumfassten Unterobjekte des Produktgraphen bevorzugt so vorgegangen,

- dass der Produktgraph Verbindungen zwischen Objekten aufweist, die der Struktur des ersten Graphen entsprechen, und Verbindungen, die der Struktur des zweiten Graphen entsprechen, und

- dass das Identifizieren von Unterobjekten des Produktobjekts umfasst:

  - das Selektieren von Verbindungen, die unmittelbar und/oder mittelbar von dem Produktobjekt ausgehen und die Struktur des ersten Graphen aufweisen, wenn dem zugewiesenen Objekt des ersten Graphen die zweite Berechtigungskategorie zugewiesen ist,

- das Selektieren von Verbindungen, die unmittelbar und/oder mittelbar von dem Produktobjekt ausgehen und die Struktur des zweiten Graphen aufweisen, wenn dem zugewiesenen Objekt des zweiten Graphen die zweite Berechtigungskategorie zugewiesen ist,

- das Nachverfolgen der selektierten Verbindungen, wobei alle Unterobjekte identifiziert werden, die vom Produktobjekt ausgehend mittels der selektierten Verbindungen erreichbar sind.

Wenn hingegen eine dritte Berechtigungskategorie vorgesehen ist, die eine sich auf das jeweilige Objekt und diejenigen Unterobjekte dieses Objekts erstreckende Berechtigung darstellt, denen keine Berechtigung der ersten oder zweiten Berechtigungskategorie eines anderen Benutzers zugewiesen ist, wird so vorgegangen, dass das Identifizieren von Unterobjekten des Produktobjekts umfasst:

- das Selektieren von Verbindungen, die unmittelbar und/oder mittelbar von dem Produktobjekt ausgehen und die Struktur des ersten Graphen aufweisen, wenn dem zugewiesenen Objekt des ersten Graphen die dritte Berechtigungskategorie zugewiesen ist,

- das Selektieren von Verbindungen, die unmittelbar oder mittelbar von dem Produktobjekt ausgehen und die Struktur des zweiten Graphen aufweisen, wenn dem zugewiesenen Objekt des zweiten Graphen die dritte Berechtigungskategorie zugewiesen ist,

- das Nachverfolgen der selektierten Verbindungen, wobei alle Unterobjekte identifiziert werden, die vom Produktobjekt ausgehend mittels der selektierten Verbindungen erreichbar sind und denen keine Berechtigung der ersten oder zweiten Berechtigungskategorie eines anderen Benutzers zugewiesen ist.

Die Erfindung wird nachfolgend anhand der folgenden Ausführungsbeispiele näher erläutert. Die hierin verwendeten Begriffe werden vorab wie folgt definiert.

Graph:

Ein Graph ist eine Menge bestehend aus Punkten, welche mit Linien verbunden sind. Die Punkte werden Knoten $k_i$, und die Linien Kanten $e_j$ genannt. Die Knoten werden im Rahmen der Erfindung auch als Objekte bezeichnet. Die Kanten werden im Rahmen der Erfindung auch als Verbindungen bezeichnet.

Gerichteter Graph:

Ein gerichteter Graph ist ein Graph, dessen Kanten $e_j$ eine Richtung aufweisen.

Kartesisches Produkt von Graphen:

Es seien G und H zwei Graphen. Ihre Knotenmengen bezeichne man mit $G_k = \{g_i\}$ und $H_k = \{h_j\}$. Die Knotenmenge des Produktgraphen ist das kartesische Produkt der beiden zugrundeliegenden Graphen:

Knotenmenge des Produktgraphen:

$$G \times H = \left\{ \left( g_i, h_j \right) \middle| g_i \in G \wedge h_j \in H \right\}$$

Kanten:

Zwei Knoten des Produktgraphen $(g_i, h_j)$ und $(g'_i, h'_j)$ sind verbunden dann und nur dann, wenn

$$g_i = g'_i \wedge h_j \xrightarrow{\ H\ } h'_j$$

oder

$$g_i \xrightarrow{\ G\ } g'_i \wedge h_j = h'_j$$

wobei das Symbol

$$x \xrightarrow{\ F\ } y$$

die Existenz einer Kante zwischen zwei Knoten x und y im Graphen F darstellt.

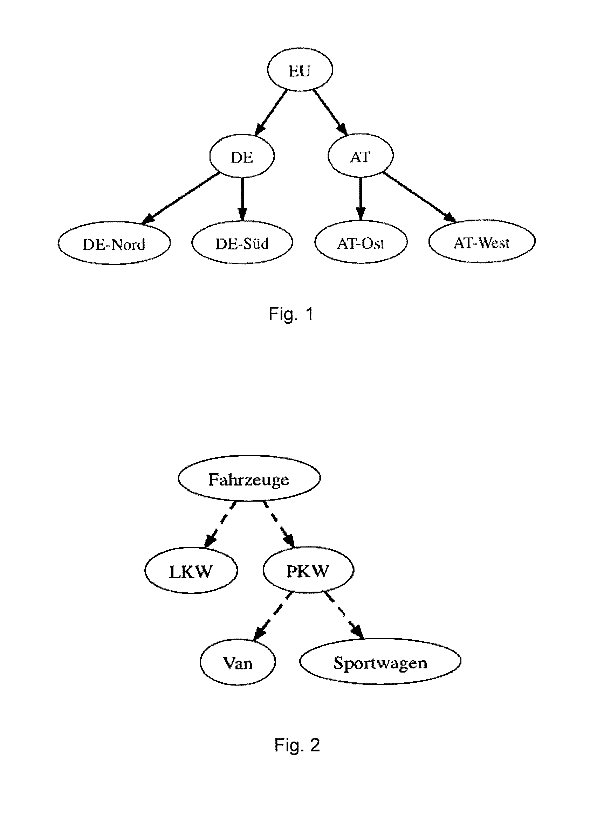

Bei einem ersten Ausführungsbeispiel stellt der Graph G die Hierarchie der geografischen Niederlassungen einer Gesellschaft dar (siehe Fig. 1). Dabei steht "EU" für die Europäische Union, "DE" für Deutschland und "AT" für Österreich. Weiters stellt Graph H hierarchisch die Produktkategorien dieser Gesellschaft dar (siehe Fig. 2). Im konkreten Fall handelt es sich hierbei um Fahrzeuge, die in Personenkraftfahrzeuge (PKW) und Lastkraftfahrzeuge (LKW) eingeteilt werden. Die Personenkraftfahrzeuge umfassen als Untergruppen Vans und Sportwagen. Zur besseren Unterscheidung sind die Verbindungen (Kanten) zwischen den einzelnen Knoten beim Graphen H mit voller Linie und beim Graphen G strichliert gezeichnet.

In jedem Ausgangsgraphen G bzw. H wird jeweils der Knoten (das Objekt) bestimmt, in welchem ein Benutzer berechtigt werden soll, d.h. für welchen er zuständig sein soll. Der entsprechende Knoten wird mit $g_0 \in G$ und $h_0 \in H$ bezeichnet. Die Berechtigung wird vergeben indem man jedem der gewählten Knoten eine der folgenden Kategorien der Rechtezuweisung zuweist. Als Berechtigungskategorien stehen bevorzugt global, lokal und delegierbar zur Wahl. Die semantische Bedeutung dieser Kategorien ist wie folgt definiert:

> lokal: der Aufgabenbereich besteht einzig aus dem zugewiesenen Knoten.
> global: der Aufgabenbereich besteht aus dem gesamten Subbaum des zugewiesenen Knotens, d.h. aus dem zugewiesenen Knoten und allen Unterobjekten dieses Knotens.
> delegierbar: der Aufgabenbereich besteht aus dem zugewiesenen Knoten und allen Unterobjekten dieses Knotens außer in denjenigen Knoten (sowie den darunterliegenden Knoten), in welchen das gleiche Recht einem anderen Benutzer zugewiesen wurde.

Der Aufgabenbereich des Benutzers wird, ausgehend von dem Knoten, der dem Benutzer explizit zugewiesen wurde, grundsätzlich wie folgt bestimmt:

> 1. Falls die Berechtigung im Graphen vom Typ der Berechtigungskategorie "lokal" ist, dann werden keine weiteren Knoten die mit dem explizit zugeordneten Knoten verbunden sind, zu dem Aufgabenbereich des Benutzers hinzugefügt.
> 2. Falls die Berechtigung im Graphen vom Typ der Berechtigungskategorie "global" ist, dann werden alle Knoten, die mit dem explizit zugeordneten Knoten verbunden sind, dem Aufgabenbereich des Benutzers hinzugefügt.
> 3. Falls die Berechtigung im Graphen vom Typ der Berechtigungskategorie "delegierbar" ist, dann werden alle Knoten, die mit dem explizit zugeordneten Knoten verbunden sind, dem Aufgabengebiet des Benutzers zugeordnet, mit Ausnahme der Knoten, die bereits einem anderen Benutzer zugeordnet sind.

Diese Vorgehensweise wird ebenso bei dem oder den weiteren Graphen gewählt und ist auch auf n-fache Kartesische Produkte von n verschiedenen Graphen anwendbar.

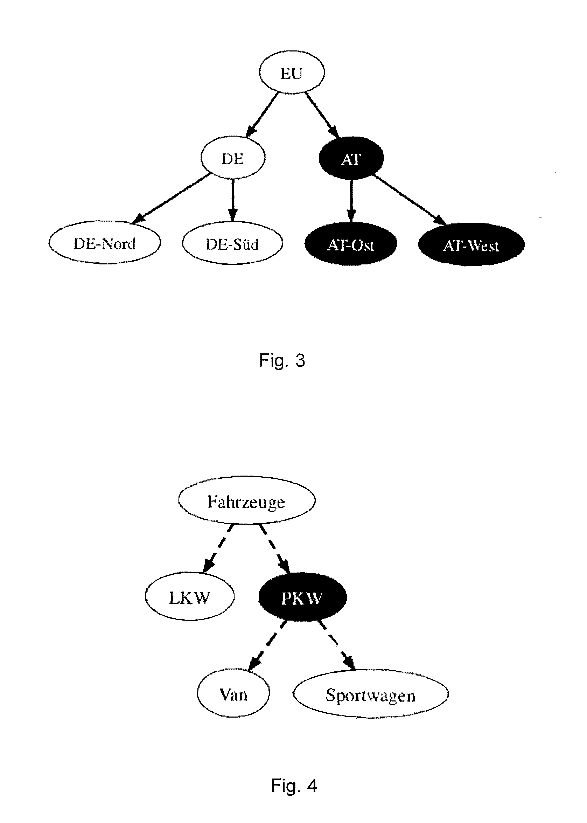

Im vorliegenden ersten Ausführungsbeispiel wird der Aufgabenbereich eines Mitarbeiters durch $(AT_{global}, PKW_{lokal})$ definiert. Der Mitarbeiter ist im Graphen G somit für den Knoten "AT" sowie alle darunter liegenden Unterobjekte, nämlich "AT-Ost" und "AT-West" zuständig, d.h. für ganz Österreich. Im Graphen H ist dieser Mitarbeiter nur für den Knoten "PKW" zuständig, d.h. er ist für alle PKWs mit Ausnahme von Vans und Sportwägen zuständig. Die Knoten, denen die Berechtigung zugewiesen sind und die Knoten, welche von dieser Berechtigung auf Grund der Berechtigungskategorie miterfasst sind, sind in den Fig. 3 und 4 mit einem dunklen Hintergrund gezeichnet.

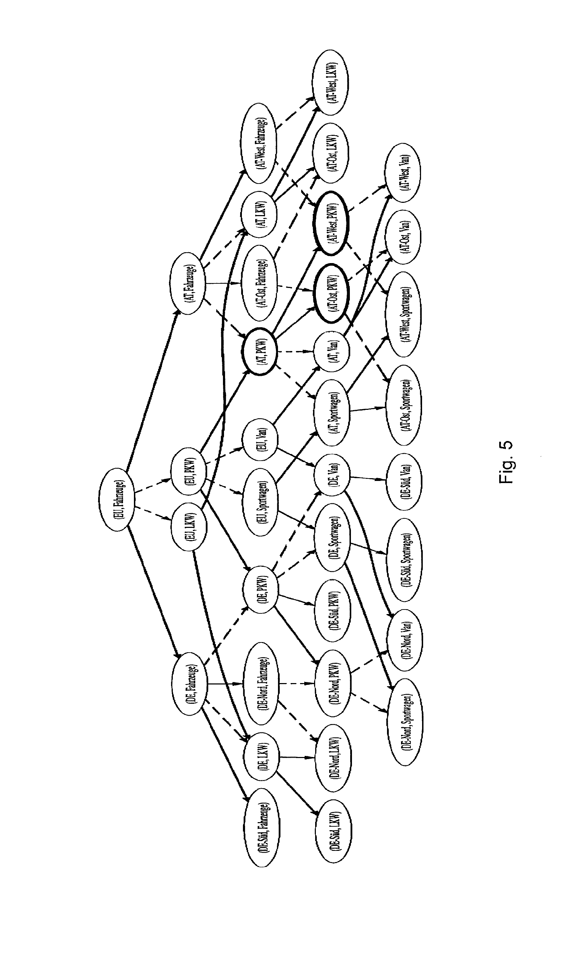

In Fig. 5 ist das kartesische Produkt $G \times H$ der zwei Graphen G und H dargestellt. Der Produktgraph weist hierbei Verbindungen zwischen Objekten auf, die der Struktur des ersten Graphen entsprechen und daher mit voller Linie gezeichnet sind, und Verbindungen, die der Struktur des zweiten Graphen entsprechen und daher mit strichlierter Linie gezeichnet sind. In diesem Produktgraphen wird zunächst derjenige Knoten $(g_0, h_0)$ identifiziert, der sich aus dem Knoten $g_0$ des ersten Graphen und dem Knoten $h_0$ des zweiten Graphen ergibt. Dieser Knoten ist (AT, PKW) und ist in Fig. 5 stark umrandet dargestellt. Ausgehend von diesem Knoten $(g_0, h_0)$ im Produktgraphen und den jeweiligen Zuweisungskategorien $(kg_0, kh_0)$ lässt sich nun unter Zuhilfenahme der jeweiligen Kanten der Aufgabenbereich bestimmen, ohne sämtliche Kombinationen einzeln berechnen zu müssen. Da die Zuweisung im Graphen G (Fig. 3) global ist, müssen sämtliche Knoten des Produktgraphen ausgehend von (AT, PKW), die mittels mit voller Linie gezeichneter Kanten erreichbar sind, dem Aufgabenbereich zugeordnet werden. Die Kategorie der Zuweisung im Graphen H (Abb. 4) ist jedoch lokal, somit dürfen strichliert gezeichnete Kanten ausgehend von (AT, PKW) nicht weiterverfolgt werden. Der durch starke Umrandung gekennzeichnete Aufgabenbereich in diesem Falle ist die Menge der Knoten
B={
(AT,PKW),
(AT-Ost,PKW),
(AT-West,PKW)}

Diese Darstellung erfordert keine genaue Auflistung jedes Knotens, für den der Benutzer die Berechtigung hat.

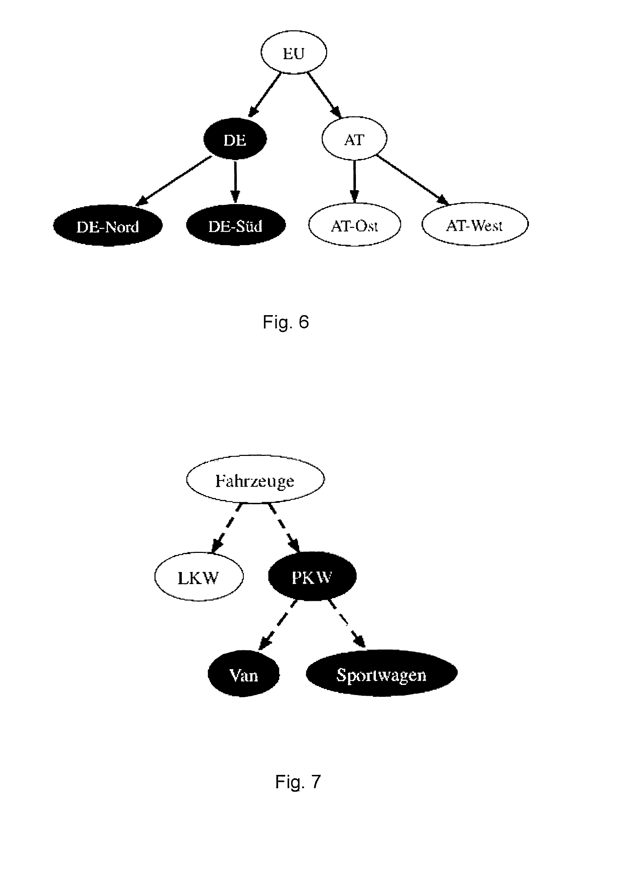

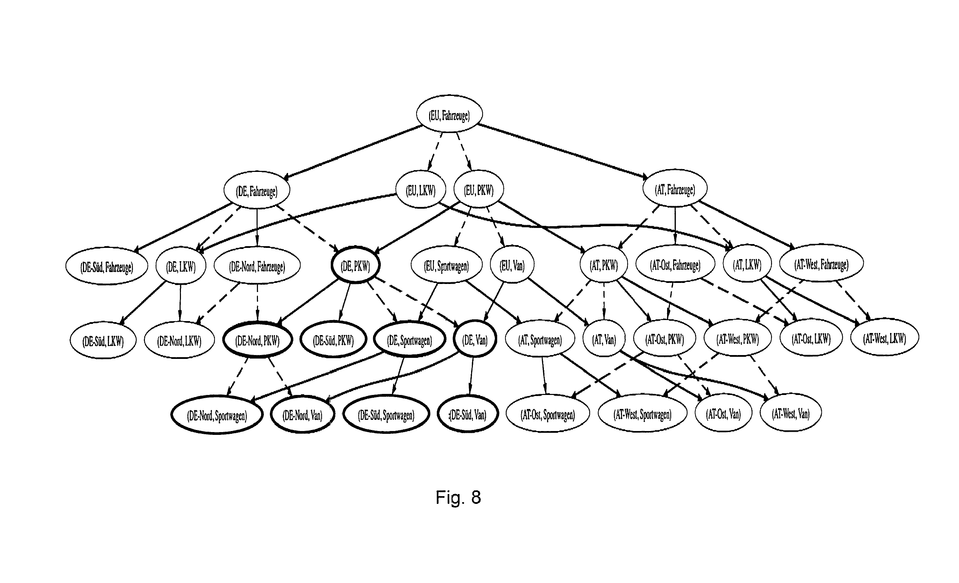

In einem zweiten Ausführungsbeispiel ist der Aufgabenbereich eines Mitarbeiters durch $(DE_{global}, PKW_{global})$ definiert. Dies ist in den Fig. 6 und 7 dargestellt. Der Produktgraph ist in Fig. 8 dargestellt. Dem obigen Muster folgend lässt sich der durch starke Umrandung gekennzeichnete Aufgabenbereich des Mitarbeiters wie folgt eruieren.
B={
(DE,PKW),
(DE,Van),
(DE,Sportwagen),
(DE-Süd,PKW),
(DE-Nord,PKW),
(DE-Süd,Van),
(DE-Süd,Sportwagen),
(DE-Nord,Van),
(DE-Nord,Sportwagen)}

Dabei wurden ausgehend vom Knoten (DE, PKW) sowohl Kanten mit strichlierter Linie als auch Kanten mit voller Linie nachverfolgt und alle Unterknoten, die sich entlang dieser Kanten erreichen lassen, dem Aufgabenbereich zugeordnet.

In einem dritten Ausführungsbeispiel wird der Fall einer Kundendiensttätigkeit (Beschwerde) behandelt. Die eingehende Anfrage wird einem verantwortlichen Benutzer mittels Einscannen der Beschwerde und Auswählen der Berechtigungskategorien (Produkt und Region) zugewiesen.

Ein Benutzer, dem die Aufgaben eines Beschwerdemanagers ($EU_{global}$, $Sportwägen_{global}$) zugewiesen sind, wird automatisch für alle eingehenden Beschwerden betreffend das Produkt "Sportwägen" aus allen Regionen innerhalb der Europäischen Union ausgewählt.

Gleichzeitig wird ein Benutzer mit dem Aufgabenbereich eines Beschwerdemanagers ($EU_{global}$, $Fahrzeuge_{delegierbar}$) automatisch für alle eingehenden Beschwerden aus allen Regionen innerhalb der Europäischen Region betreffend alle Fahrzeuge mit Ausnahme des Produkts "Sportwägen", welches in den Aufgabenbereich des oben beschriebenen Beschwerdemanagers fällt, ausgewählt.

Falls eine neue Unterteilung des Bereichs "Sportwägen" und/oder der Regionen eingeführt wird, fällt kein zusätzlicher Verwaltungsaufwand für die Zuweisung des neuen Aufgabenbereichs an.

Zusätzlich ist es möglich, eine zusätzliche Berechtigungskategorie (z.B. "Art der Beschwerde") einzuführen und in die Aufgabenbereiche der oben beschriebenen Beschwerdemanager zu integrieren. Beispielsweise kann der Aufgabenbereich eines Beschwerdemanagers ($EU_{global}$, $Fahrzeug_{delegierbar}$, $Technischer\_Fohler_{global}$) sein.

## Patentansprüche

1. Computergestütztes Verfahren zur automatischen Zuweisung von Arbeitsaufgaben in einem Arbeitsablauf-Verwaltungs-System, umfassend

    - das Vorsehen wenigstens eines ersten gerichteten Graphen und wenigstens eines zweiten gerichteten Graphen, jeweils umfassend Objekte und zwischen diesen Objekten bestehende Verbindungen, wobei Objekte, deren Verbindungen direkt oder indirekt von einem übergeordneten Objekt ausgehen, Unterobjekte dieses Objekts ausbilden,
    - Vorsehen von wenigstens zwei verschiedenen Berechtigungskategorien, wobei eine erste Berechtigungskategorie eine auf das jeweilige Objekt beschränkte, lokale Berechtigung darstellt und eine zweite Berechtigungskategorie eine sich auf das jeweilige Objekt und zumindest einen Teil der Unterobjekte dieses Objekts erstreckende Berechtigung darstellt,
    - Zuweisen, in Bezug auf einen Benutzer, einer Berechtigungskategorie zu wenigstens einem Objekt in dem ersten und zu wenigstens einem Objekt in dem zweiten Graphen, um jeweils wenigstens ein zugewiesenes Objekt zu erhalten,
    - Bilden des kartesischen Produkts aus dem ersten und dem zweiten Graphen, um einen Produktgraphen zu erhalten,
    - Identifizieren des sich aus dem zugewiesenen Objekt des ersten Graphen und dem zugewiesenen Objekt des zweiten Graphen ergebenden Produktobjekts des Produktgraphen und Identifizieren von Unterobjekten des Produktobjekts, die ggf. von der zweiten Berechtigungskategorie miterfasst sind,
    - Zuweisen des Benutzers zu dem identifizierten Produktobjekt und den identifizierten Unterobjekten des Produktgraphen,
    - Erhalten einer Zuständigkeitsanforderung hinsichtlich eines angeforderten Objekts des Produktgraphen,
    - Ermitteln des dem angeforderten Objekt zugewiesenen Benutzers,
    - Zuweisen der Anforderung zu dem Benutzer.

2. Verfahren nach Anspruch 1, **dadurch gekennzeichnet, dass** die zweite Berechtigungskategorie eine sich auf das jeweilige Objekt und alle Unterobjekte dieses Objekts erstreckende Berechtigung darstellt.

3. Verfahren nach Anspruch 1 oder 2, **dadurch gekennzeichnet,**

    - **dass** der Produktgraph Verbindungen zwischen Objekten aufweist, die der Struktur des ersten Graphen entsprechen, und Verbindungen, die der Struktur des zweiten Graphen entsprechen, und
    - **dass** das Identifizieren von Unterobjekten des Produktobjekts umfasst:

        - das Selektieren von Verbindungen, die unmittelbar und/oder mittelbar von dem Produktobjekt ausgehen und die Struktur des ersten Graphen aufweisen, wenn dem zugewiesenen Objekt des ersten Graphen die zweite Berechtigungskategorie zugewiesen ist,
        - das Selektieren von Verbindungen, die unmittelbar und/oder mittelbar von dem Produktobjekt ausgehen und die Struktur des zweiten Graphen aufweisen, wenn dem zugewiesenen Objekt des zweiten Graphen die zweite Berechtigungskategorie zugewiesen ist,
        - das Nachverfolgen der selektierten Verbindungen, wobei alle Unterobjekte identifiziert werden, die vom Produktobjekt ausgehend mittels der selektierten Verbindungen erreichbar sind.

4. Verfahren nach einem der Ansprüche 1 bis 3, umfassend das Vorsehen einer dritten Berechtigungskategorie, die eine sich auf das jeweilige Objekt und diejenigen Unterobjekte dieses Objekts erstreckende Berechtigung darstellt, denen keine Berechtigung der ersten oder zweiten Berechtigungskategorie eines anderen Benutzers zugewiesen ist.

5. Verfahren nach Anspruch 4, **dadurch gekennzeichnet, dass** das Identifizieren von Unterobjekten des Produktobjekts umfasst:

   - das Selektieren von Verbindungen, die unmittelbar und/oder mittelbar von dem Produktobjekt ausgehen und die Struktur des ersten Graphen aufweisen, wenn dem zugewiesenen Objekt des ersten Graphen die dritte Berechtigungskategorie zugewiesen ist,
   - das Selektieren von Verbindungen, die unmittelbar oder mittelbar von dem Produktobjekt ausgehen und die Struktur des zweiten Graphen aufweisen, wenn dem zugewiesenen Objekt des zweiten Graphen die dritte Berechtigungskategorie zugewiesen ist,
   - das Nachverfolgen der selektierten Verbindungen, wobei alle Unterobjekte identifiziert werden, die vom Produktobjekt ausgehend mittels der selektierten Verbindungen erreichbar sind und denen keine Berechtigung der ersten oder zweiten Berechtigungskategorie eines anderen Benutzers zugewiesen ist.

6. Verfahren nach einem der Ansprüche 1 bis 5, **dadurch gekennzeichnet, dass** wenigstens ein weiterer Graph vorgesehen ist, der Objekte und zwischen diesen Objekten bestehende Verbindungen umfasst.

7. Datenverarbeitungsprogramm zur Ausführung in einem Datenverarbeitungssystem, das Softwarecode-Elemente zur Ausführung eines Verfahrens nach einem der Ansprüche 1 bis 6 umfasst.

8. Computerprogrammprodukt, das auf einem durch einen Computer nutzbaren Medium gespeichert ist und vom Computer lesbare Programm-Mittel enthält, um einen Computer zu veranlassen, ein Verfahren nach einem der Ansprüche 1 bis 6 auszuführen.

Fig. 1

Fig. 2

Fig. 3

Fig. 4

Fig. 5

Fig. 6

Fig. 7

Fig. 8

Europäisches
Patentamt

European
Patent Office

Office européen
des brevets

**EUROPÄISCHER RECHERCHENBERICHT**

Nummer der Anmeldung

EP 13 45 0041

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 195 13 960 A1 (IBM [US])<br>24. Oktober 1996 (1996-10-24)<br>* das ganze Dokument *<br>----- | 1-8 | INV.<br>G06Q10/06 |
| X | DE 199 55 004 A1 (IBM [US])<br>29. Juni 2000 (2000-06-29)<br>* das ganze Dokument *<br>----- | 1-8 | |
| X | US 2009/198548 A1 (KOHLER MATHIAS [DE] ET AL) 6. August 2009 (2009-08-06)<br>* das ganze Dokument *<br>----- | 1-8 | |
| X | US 2005/055697 A1 (BUCO MELISSA JANE [US] ET AL) 10. März 2005 (2005-03-10)<br>* das ganze Dokument *<br>----- | 1-8 | |
| X | US 2005/192783 A1 (LYSTAD GARR S [US] ET AL) 1. September 2005 (2005-09-01)<br>* das ganze Dokument *<br>----- | 1-8 | |

RECHERCHIERTE SACHGEBIETE (IPC)

G06Q

Der vorliegende Recherchenbericht wurde für alle Patentansprüche erstellt

| Recherchenort | Abschlußdatum der Recherche | Prüfer |
|---|---|---|
| München | 9. Januar 2014 | Mülthaler, Evelyn |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

............................................................................
& : Mitglied der gleichen Patentfamilie, übereinstimmendes
    Dokument

EPO FORM 1503 03.82 (P04C03)

**EP 2 706 489 A1**

**ANHANG ZUM EUROPÄISCHEN RECHERCHENBERICHT**
**ÜBER DIE EUROPÄISCHE PATENTANMELDUNG NR.**                    EP 13 45 0041

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2014

| Im Recherchenbericht angeführtes Patentdokument | Datum der Veröffentlichung | Mitglied(er) der Patentfamilie | Datum der Veröffentlichung |
|---|---|---|---|
| DE 19513960 A1 | 24-10-1996 | KEINE | |
| DE 19955004 A1 | 29-06-2000 | DE 19955004 A1<br>US 6631354 B1 | 29-06-2000<br>07-10-2003 |
| US 2009198548 A1 | 06-08-2009 | KEINE | |
| US 2005055697 A1 | 10-03-2005 | US 2005055697 A1<br>US 2008005744 A1 | 10-03-2005<br>03-01-2008 |
| US 2005192783 A1 | 01-09-2005 | KEINE | |

EPO FORM P0461

Für nähere Einzelheiten zu diesem Anhang : siehe Amtsblatt des Europäischen Patentamts, Nr.12/82

15